# EUROPEAN PATENT APPLICATION

(11) **EP 3 674 046 A1**
(43) Date of publication of application: **01.07.2020**
(21) Application number: 19220222.4
(22) Date of filing: 31.12.2019
(51) Int. Cl.: B28B 1/00, B28B 1/26, B29C 33/38, B28B 7/34

(54) **METHOD FOR MANUFACTURING CERAMI PRODUCTS**

(30) Priority: 31.12.2018 IT 201800021505
(71) Applicant: SACMI COOPERATIVA MECCANICI IMOLA SOCIETA' COOPERATIVA, 40026 Imola (BO) (IT)
(72) Inventor: MAZZANTI, Vasco, 40026 IMOLA (BO) (IT); FIGLIANO, Paolo, 40026 IMOLA (BO) (IT)
(74) Representative: Mangini, Simone

(57) **Abstract**

A method for manufacturing ceramic products (2); during a pressing step, a blank (4) comprising clay and up to 25% by weight of water is compressed between a first half-mould (5) and a second half-mould (6), so as to obtain a ceramic product (2); during the pressing step, a gas is forced through the first half-mould (5) towards the second half-mould (6); initially, the first and the second half-mould (5, 6) move close to each other, subsequently, they part from each other so as to free part of the gas comprised between the first half-mould (5) and the blank (4); they then move close to each other again to compress the blank (4) and obtain the ceramic product (2).

## Description

### CROSS-REFERENCE TO RELATED APPLICATIONS

This patent application claims priority from Italian patent application no. 102018000021505 filed on 31/12/2018.

### TECHNICAL FIELD

The present invention concerns an apparatus and a method for manufacturing ceramic products.

### BACKGROUND TO THE INVENTION

In the field of the manufacture of ceramic products, for example tiles, crockery (such as cups, oven-proof dishes etc.) and decorative items, it is common practice to use moulds with half-moulds provided with plaster pressing bodies, which are adapted to transfer their surface shape to blanks (clay parallelepipeds with a water percentage below 25%). These types of moulds allow the manufacture of ceramic products with good aesthetic quality which therefore have a shape very similar to that of the surfaces of the pressing bodies. It is possible to obtain these types of results since the ceramic products are easily demoulded from the half-moulds. The ease of separation is probably due to the fact that a thin surface layer of the pressing bodies detaches together with the ceramic product.

Plaster moulds, however, are not without drawbacks. For example, they are relatively delicate (they wear easily) and have to be replaced after approximately one and a half / two hours of work (after approximately every 1500-2000 strokes).

Moulds with metal or plastic half-moulds are also known, interposing a layer of soft rubber (for example India rubber) between the moulds and the blanks.

These types of moulds are stronger than those made of plaster but are not able to produce ceramic products with high aesthetic quality since the layer of rubber alters the geometry of the mould (reducing, among other things, the definition thereof).

The aim of the present invention is to provide an apparatus and a method for manufacturing ceramic products, which overcome, at least partially, the drawbacks of the known art and are, at the same time, easy and inexpensive to produce.

### SUMMARY

According to the present invention, an apparatus and a method are provided according to the following independent claims and, advantageously, according to any one of the claims depending directly or indirectly on the independent claims.

### BRIEF DESCRIPTION OF THE FIGURES

The present invention will now be described with reference to the attached drawings, which illustrate non-limiting embodiment examples thereof, in which:
- figure 1 is a lateral schematic view of an apparatus for implementing a method in accordance with the present invention;
- figures 2-4 are lateral schematic views of successive operating configurations of the apparatus of figure 1 with details removed for clarity;
- figure 5 is a view from below of a detail of a part of the apparatus of figures 1-4;
- figure 6 is the view from below of figure 5 in which internal elements of the part are illustrated by a broken line;
- figure 7 is a lateral view of the part illustrated in figures 5 and 6;
- figure 8 is a lateral section view of the part of figures 5 to 7;
- figure 9 is a lateral view of a different embodiment of the part of figures 5 to 8;
- figure 10 is a lateral section view of the part of figure 9;

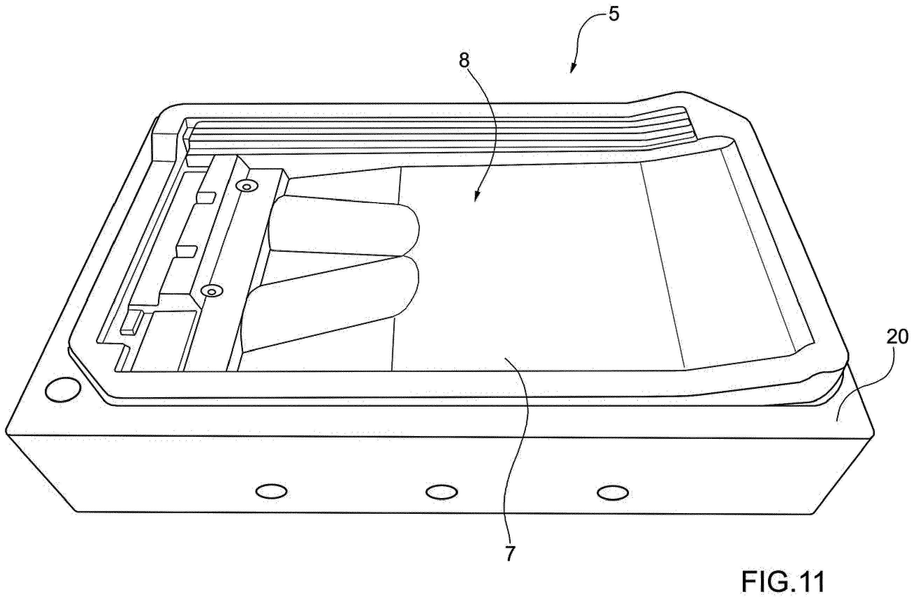

- figure 11 is a perspective view of the part of figures 5 to 7;

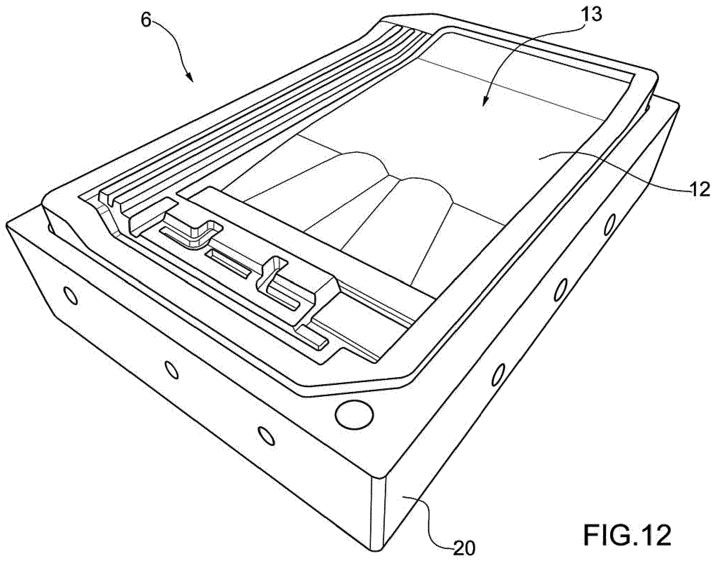

- figure 12 is a perspective view of a further part of the apparatus of figures 1 to 4;
- figure 13 is a plan view of instruments used for the production of a component of the part illustrated in figures 5 to 11;
- figure 14 is a plan view of instruments used for the production of a component of the part illustrated in figure 12; and
- figure 15 is a graph which illustrates the trend of the distance between two components of the apparatus of figure 1; the X axis shows the time, the Y axis the distance.

### DETAILED DISCLOSURE

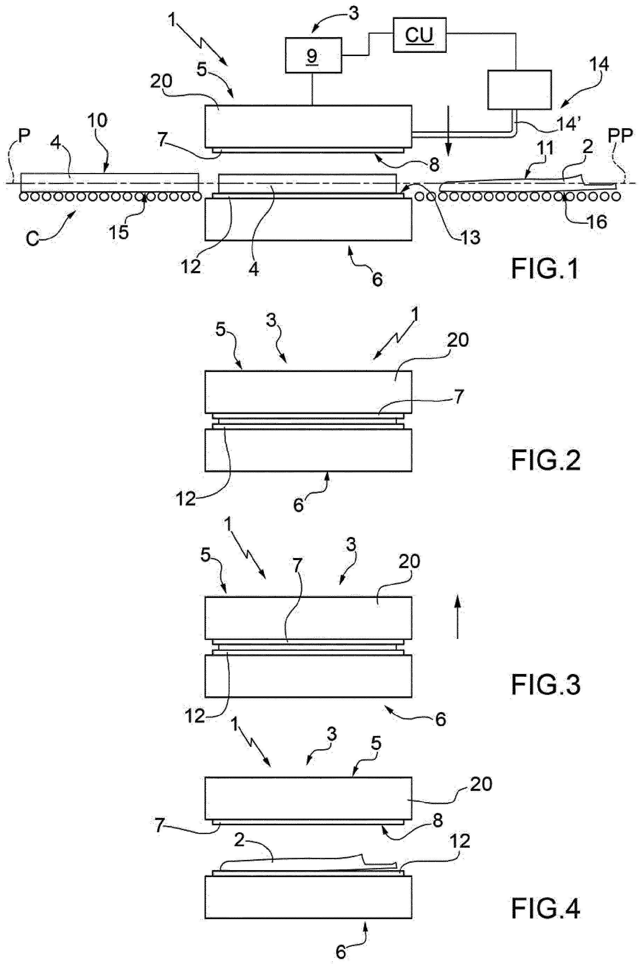

In figure 1, the number 1 indicates overall an apparatus for manufacturing ceramic products 2 (for example tiles and/or crockery - like cups, oven-proof dishes etc.).

The apparatus 1 comprises a mould 3, which is adapted to compress a blank 4, comprising (consisting of) clay (which can be a mixture of different clays) and up to (namely a value below or equal to) 25% by weight, relative to the total weight of the blank 4, of water, so as to obtain a ceramic product 2. In particular, the blank 4 comprises at least 14% (up to 25%) by weight, relative to the total weight of the blank 4, of water.

The mould 3, in turn, comprises a half-mould 5 and at least a half-mould 6.

The apparatus further comprises an actuator 9 to move the half-moulds 5 and 6 relative to each other, in particular one towards the other (and if necessary one away from the other).

The half-mould 5 comprises a pressing body 7 having a pressing surface 8 provided with a given shape, which is adapted to be impressed on a face 10 of the blank 4 so as to obtain at least part of a face 11 of the ceramic product 2. In particular, the pressing surface 8 is exposed towards the outside (in other words, it is not covered by further elements).

The half-mould 6 comprises a pressing body 12 (which, in particular, is arranged below the half-mould 5) having a pressing surface 13.

Advantageously but not necessarily, the half-mould 5 is arranged above the half-mould 6.

The pressing body 7 comprises (in particular, is made of) an at least partially porous resin (in particular, a porous resin).

Advantageously but not necessarily, the pressing body 12 comprises (in particular, is made of) an at least partially porous resin (in particular, a porous resin).

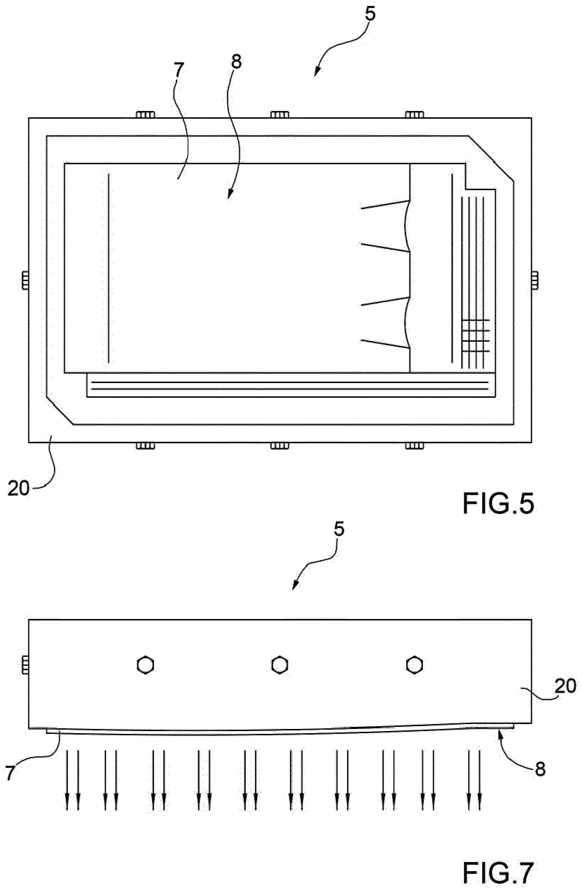

The mould 3 further comprises a pressure device 14 adapted to force a gas (in particular, air) through the pressing body 7 towards the half-mould 6 (in figures 7, 8 and 9 the arrows pointing down indicate, by way of non-limiting example, the movement of the gas flowing out of the pressing body 7). More precisely, the pressure device 14 is adapted to keep under pressure a gas inside the pressing body 7. According to some non-limiting embodiments, the pressure device 14 comprises a pump connected to the pressing body 7 by means of at least one duct 14'.

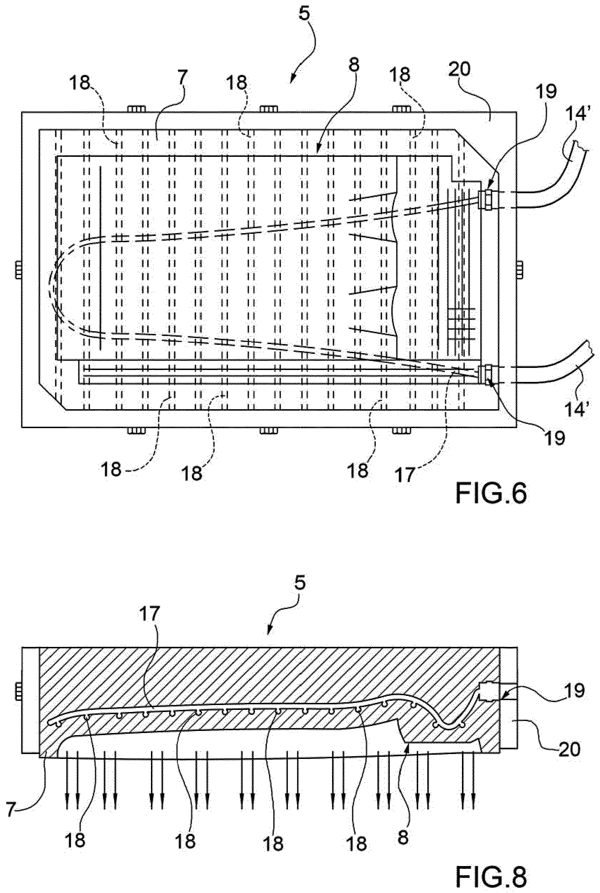

In the embodiment illustrated (see in particular figure 6), the pressure device 14 comprises two channels 14'. In use, the pressure device 14 exerts a pressure on the (feeds the) gas towards the pressing body 7 along both the channels 14'.

In particular, the pressure device 14 is adapted to force the gas through the (the pores of the) pressing body 7 towards the half-mould 6 so that, in use, a layer of gas is at least partially interposed between the pressing surface 8 and the face 10 of the blank 4. In other words, the pressure device 14 is adapted to press the gas through the pressing body 7 towards the half-mould 6 so that gas flows out of the pressing surface 8. In figures 7, 8 and 10 the outflow of gas from the pressing surface 8 is schematically illustrated by arrows.

The particular structure of the apparatus 1 (more precisely of the mould 3) surprisingly allows the aesthetic quality of the face 11 to be improved, limiting the possibility of the blank 4 becoming too firmly attached to the pressing body 7 (which, it should be remembered, comprises a resin) while the blank 4 is compressed between the half-moulds 5 and 6.

According to some non-limiting embodiments, the pressure device 14 (or the further pressure device) is (also) adapted to apply a negative pressure (in particular, a suction) through the pressing body 7 (and/or the pressing body 12). In this way, in particular, the air (and/or the liquid - for example water) can be sucked through the pressing surface 8 (and/or the pressing surface 13).

In the embodiment illustrated in figure 1, the actuator 9 is adapted to move only the half-mould 5 (towards and away from the half-mould 6). Note, however, that according to alternative embodiments (not illustrated) the actuator 9 is adapted to move also the half-mould 6 (or only the half-mould 6).

In particular, the pressing surface 13 has a given shape adapted to be impressed on a face 15 of the blank 4 so as to obtain at least part of a face 16 of the ceramic product 2.

Advantageously but not necessarily, the pressing body 12 comprises (in particular, is made of) a resin (equal to or different from the resin of the pressing body 7) which is at least partially porous (in particular, a porous resin).

Advantageously but not necessarily (see figures 6, 8 and 10), the pressing body 7 has inside it at least one channel 17, in particular having a cross-section of at least 4 mm², more precisely of at least 7 mm² (in particular, up to 80 mm²) connected to the pressure device 14, which is adapted to maintain (feed) in the channel the gas under pressure to force the gas through the pressing body 7 towards the half-mould 6.

In this way it is possible to obtain a relatively uniform distribution of the gas on a significant part of the pressing surface 8.

In particular, the pressing body 7 has inside it a plurality of channels 17 and 18. In this way it is possible to further improve the uniformity of the gas distribution on the pressing surface 8.

According to some embodiments (such as, for example, the one illustrated), the channels 17 and 18 are fluidically connected to each other so as to provide a network of channels (or one single branched channel).

In particular, the channel 17 (and, if necessary, also the channels 18) is made of the cited resins (in other words it extends through the resin).

Advantageously but not necessarily, the channel 17 is arranged (or the channels 17 and 18 are arranged) at a distance up to (in other words, less than or equal to) 5 cm (in particular, at least 0.5 cm) from the pressing surface 8.

In this way a good air distribution uniformity is obtained relative to the pressure applied by the pressure device 14 (reducing the pressure losses).

In particular, the channel is arranged at a distance of at least 1 cm from the pressing surface 8.

To measure the water content of the resin, the article (in particular, the pressing body 7 or, possibly, 12) comprising (made of) the resin (in this case, the pressing body 7) is placed in a kiln at 50°C for the time necessary to reach a constant weight (at this point the article can be considered substantially dry). The percentage weight difference, relative to the initial weight, of the article before and after the treatment indicates the percentage of water by weight contained in the article. This procedure applies *mutatis mutandis* (the main difference being that the kiln is kept at 110° C) also to measure the percentage by weight of water of the blanks 4.

Advantageously but not necessarily, the (the entire) pressing body 7 comprises up to (in particular, less than) 18% by weight, relative to the total weight of the pressing body 7, of water. More precisely, the resin of the pressing body 7 comprises up to (in particular, less than) 18% by weight, relative to the total weight of the resin of the pressing body 7, of water.

Advantageously but not necessarily, the (the entire) pressing body 7 comprises up to 60% (in particular, 40% to 50%) by weight, relative to the total weight of the water contained in the pressing body 7 at saturation, of water. More precisely, the resin of the pressing body 7 comprises up to 60% (in particular, 40% to 50%) by weight, relative to the total weight of the water contained in the resin at saturation, of water.

The weight of the pressing body 7 (and/or of the resin) at saturation is measured by keeping the pressing body (and/or the resin) immersed in water and taking periodic measurements of the weight of the pressing body (and/or of the resin), for the time necessary to reach a constant weight. Said constant weight is the weight at saturation.

The weight of the substantially dry pressing body 7 (and/or of the resin) is measured by weighing the substantially dry pressing body 7 (and/or the resin) obtained as described above (namely, after treatment in the kiln until reaching the constant weight).

The weight difference between the weight of the pressing body 7 (and/or of the resin) at saturation and the weight of the substantially dry pressing body 7 (and/or of the resin) indicates the total weight of the water contained in the pressing body 7 (and/or in the resin) at saturation.

According to some non-limiting embodiments (for example like the one illustrated in the figures), the channels 18 are substantially parallel to one another and the channel 17 is transverse to them (so as to connect them). In particular, the channel 17 extends according to a U-shaped path.

In some cases, the pressing body 7 has at least one lateral hole 19, which is arranged at one end of the channel 17. In particular, the hole 19 establishes communication between the channel 17 and the pressure device 14. More precisely, the duct 14' has one end fitted in a fluid-tight manner in the hole 19.

Advantageously but not necessarily, the half-mould 5 comprises a frame 20, to (on) which (more precisely, inside which) the pressing body 7 is fitted. In particular, the frame 20 laterally envelops the pressing body 7. In particular, the frame 20 comprises (is made of) metal.

According to some non-limiting embodiments not illustrated, the frame 20 also comprises a cover arranged on the opposite side of the pressing body 7 relative to the pressing surface 8.

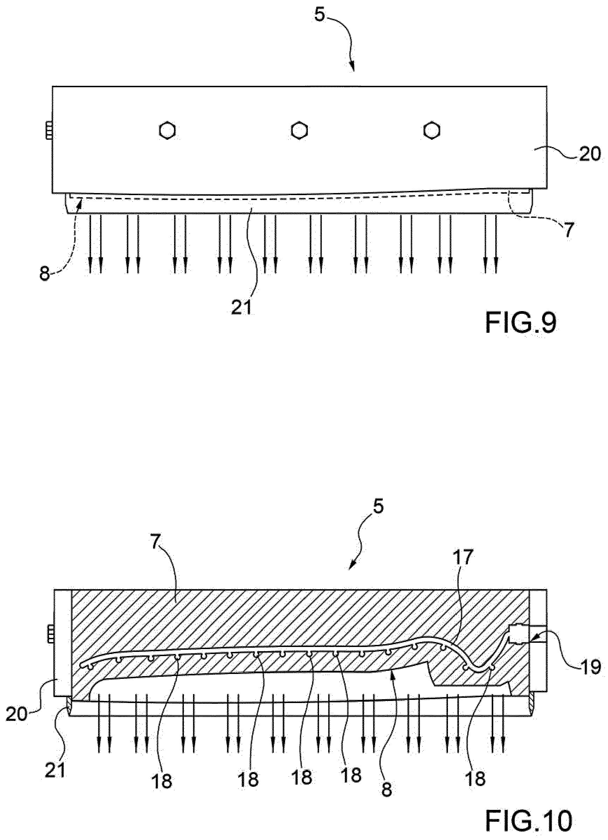

Advantageously but not necessarily (figures 9 and 10), the frame 20 comprises a protuberance 21 (for example a blade), which projects from the frame 20 towards the half-mould 6 beyond the pressing surface 8. The protuberance 21 is adapted to penetrate (partially) into the blank 4 so as to limit the passage of the gas from the pressing surface 8 towards the outside and/or the relative movement of the blank 4 with respect to the pressing surface 8 (which therefore becomes less worn).

According to some non-limiting embodiments, the protuberance 21 extends (all) around the pressing body 7. In this way, the passage of the gas from the pressing surface 8 towards the outside is limited.

More precisely, in some cases, the protuberance 21 extends partially around the pressing body 7. According to some specific non-limiting embodiments, the protuberance 21 extends all around the pressing body 7.

Advantageously but not necessarily, the half-mould 5 comprises a layer of waterproof material arranged between the frame 20 and the pressing body 7.

According to some non-limiting embodiments, the half-mould 6 (which can be equal to or different from the half-mould 5) is defined according to the characteristics indicated above and below for the half-mould 5.

In particular, the pressing body 12 (which can be equal to or different from the pressing body 7) is defined according to the characteristics indicated above and below for the pressing body 7.

More in particular, therefore, the pressure device 14 (or a further pressure device of known type and not illustrated) is adapted to force a gas (in particular, air) through the pressing body 12 towards the second half-mould 5. More precisely, the pressure device 14 (or the further pressure device) is adapted to keep a gas under pressure inside the pressing body 12.

Advantageously but not necessarily, the pressure device 14 (or the further pressure device) is (also) adapted to apply a negative pressure (in particular, a suction) through the pressing body 12. In particular, in this way, the pressure device 14 (or the further pressure device) is (also) adapted to apply a negative pressure (in particular, a suction) through the pressing body 12 on the ceramic product 2 and/or so as to suck air through the pressing surface 13.

According to some non-limiting embodiments not illustrated, the apparatus 1 also comprises a kiln (of per se known type and not illustrated) adapted to fire the ceramic product 2. In particular, the mentioned kiln is adapted to fire (so as to obtain a fired ceramic product) the ceramic product 2 at a temperature of at least 950°C (more precisely, at a temperature ranging from 1000°C to 1150°C).

According to some non-limiting embodiments (figure 1), the apparatus 1 comprises a conveying assembly C which is adapted to move the blank 4 along a path P to the mould 3 and the ceramic product 2 along a path PP from the mould 3 to the above-mentioned kiln.

In accordance with some non-limiting embodiments (like the one illustrated in figure 1), the conveying assembly C comprises a motorized roller conveyor to move the blank 4 along the path P and the ceramic product 2 along the path PP and an automated manipulator (known per se and not illustrated) to take the blank 4 from the roller conveyor to the mould 3 and the ceramic product 2 from the mould 3 to the roller conveyor.

Advantageously but not necessarily, the apparatus 1 further comprises a control unit CU, which is connected to the conveyor assembly C, to the pressure device 14 and to the actuator 9 and is adapted to control the conveyor assembly C, the pressure device 14 and the actuator 9 so as to operate them in a coordinated manner, in particular so that the method described below is implemented.

According to some embodiments, the conveying assembly C comprises a wheel D, which is adapted to rotate around its own axis A (according to some variations, the axis A is vertical, alternatively it can be horizontal) and is provided with a plurality of half-moulds 6 arranged perimetrally on the wheel D (at a substantially constant distance from one another). Solutions are also possible in which the machine has a substantially linear intermittent feed. The conveying assembly C also comprises a first manipulator (of per se known type and not illustrated) to place the blank 4 in a half-mould 6 while said half-mould 6 is moving in the area of the half-mould 5; and a second manipulator (of per se known type and not illustrated - e.g. provided with a suction head) to collect the ceramic product 2 from a discharge station DS arranged downstream of the half-mould 5.

Advantageously but not necessarily, the pressing body 7 (the cited resin) has a (total open) porosity of at least 10%, in particular up to 50% (more in particular, up to 28%) in volume, with respect to the total volume of the pressing body 7.

The porosity is measured by mercury porosimetry with a Pascal 140/240 Thermo Fisher Scientific Porosimeter (following the instructions provided with it). The principles and operation of the mercury porosimetry are well known and are described, for example, in: Mercury Porosimetry: a General (Practical) Overview, Part. Part. Syst. Charact. 23 (2006) 1-11, Herbert Giesche, DOI: 10.1002/ppsc.200601009; Characterization of Porous Solids and Powders: Surface Area, Pore Size and Density, S. Lowell, Joan E. Shields, Martin A. Thomas and Matthias Thommes, Kluwer Academic Publishers 2004, ISBN 1-4020-2302-2 (HB), ISBN 1-4020-2302-0 (e-book). In particular, the porosity is measured as established by the ISO 15901-1:2016 standard.

The total open porosity is the porosity measured considering the open pores (and not the closed pores), namely the pores that are accessible by a fluid (ISO 15901-1:2016).

Advantageously but not necessarily, the pressing body 7 (in particular, the cited resin) has a flexural strength of at least 7 MPa (in particular, of at least approximately 30 MPa), more precisely up to 42 MPa (in particular, up to approximately 35 MPa) .

The flexural strength is measured as established by the DIN 53452:1977 standard.

Advantageously but not necessarily, the pressing body 7 (in particular, the cited resin) has a tensile strength of at least approximately 5 MPa, in particular up to approximately 30 MPa.

The tensile strength is measured as established by the DIN 53455-1981 standard.

Advantageously but not necessarily, the pressing body 7 (in particular, the cited resin) has pores with a mean diameter from 0.5 (in particular, approximately 5 µm) to 80 µm (in particular, approximately 15 µm).

Unless specified otherwise, in this text, by diameter of a pore we mean the limiting diameter, namely the diameter of a circle having the same area as the smallest (cross) section of the pore.

The mean diameter of the pores is measured by mercury porosimetry with a Pascal 140/240 Thermo Fisher Scientific Porosimeter (following the instructions provided with it) . The principles and operation of the mercury porosimetry are well known (see the documents cited above in this regard). In particular, the mean diameter of the pores is measured as established by the ISO 15901-1:2016 standard.

It should be noted that by mean diameter we mean the diameter that corresponds to the fiftieth percentile of the volume of the pores, namely the diameter for which half of the volume of the pores is in the largest pores and half of the volume of the pores is in the smallest pores (ISO 15901-1:2016, in particular paragraph 3.16).

Advantageously but not necessarily, the pressing body 7 (in particular, the cited resin) has a flexural elastic modulus (measured as established by the DIN 53457 standard) ranging from approximately 440 MPa to approximately 2100 MPa.

Advantageously but not necessarily, the pressing body 7 (in particular, the cited resin) has a tensile elastic modulus (measured as established by the DIN 53457 standard) ranging from approximately 570 MPa to approximately 2100 MPa.

Advantageously but not necessarily, the pressing body 7 (in particular, the cited resin) has a compression strength (measured as established by the DIN 53454 standard) ranging from approximately 11 MPa to approximately 130 MPa.

Advantageously but not necessarily, the pressing body 7 (in particular, the cited resin) has a compression elastic modulus (measured as established by the DIN 53457 standard) ranging from approximately 300 MPa to approximately 1700 MPa.

According to some embodiments (also), the pressing body 12 (in particular, the cited resin) has a total open porosity as indicated above. In addition or alternatively, the pressing body 12 (in particular, the cited resin) has a flexural strength as indicated above. In addition or alternatively, the pressing body 12 (in particular, the cited resin) has a tensile strength as indicated above. In addition or alternatively, the pressing body 12 (in particular, the cited resin) has pores with a mean diameter as indicated above.

Advantageously but not necessarily, the pressing body 7 (and/or the pressing body 12) comprises, in particular is made of, a resin chosen from the group consisting of: acrylic resins, polyester resins, polyurethane resins, epoxy resins and a combination thereof.

In other words, the at least partially porous resin of the pressing body 7 is a resin chosen from the group consisting of: acrylic resins, polyester resins, polyurethane resins, epoxy resins and a combination thereof.

In accordance with what is commonly known, the acrylic resins are obtained from the polymerization of acrylic and/or methacrylic monomers, mainly acrylic acid and acrylic or methacrylic esters.

According to some non-limiting embodiments, the cited resin is and is produced as described in one or more of the patent documents EP165952, GB1284890 and US4727092.

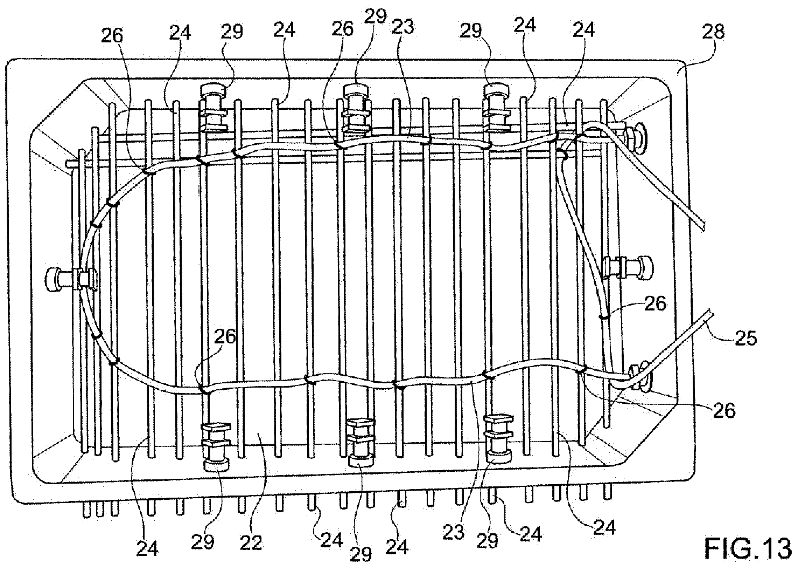

With particular reference to figure 13, according to some non-limiting embodiments, to obtain the pressing body 7 a suspension of water and oil (containing the precursors of the cited resin) is placed inside a mother mould (or matrix) 28, which is open at the top and closed at the bottom by a plate 22 (for example made of epoxy resin), the surface of which has the shape in negative of the mould surface 8. A silicone tube 23, which extends between two holes 19, a plurality of bars 24, which extend from one side to the other of the frame 20, and a further tube 25, which is partially wound around the tube 23, are arranged inside the space delimited by the frame 20 and the plate 22.

Locking clips 26 are provided to tie the tubes 23 and 25 and the bars 24 together so that they are in contact.

The bars 24 are made of rigid material (e.g. metal or plastic or a combination thereof). According to some non-limiting embodiments, the bars 24 have a silicone and/or nylon coating.

After the cited suspension has been placed in the space delimited by the mother mould 28 and the plate 22, the polymerization takes place. Once most of the polymerization has been carried out and the resin has been substantially obtained, the tubes 23 and 25 and the bars 24 are removed, sliding them out of the resin so as to create the channels 17 and 18. At this point, the pressing body 7 is removed from the mother mould 28, inserted in the frame 20 and connected (more precisely, the channels 17 and 18 are connected) to the pressure device 14. The resin is dried (the water is removed) by feeding the gas (more precisely, the air). The resin thus gets rid of the water present in the porosity.

In the embodiment illustrated in figure 13, the mother mould 28 (which is typically made of metal - e.g. aluminium) consists of one single piece. According to alternative embodiments not illustrated, the mother mould 28 comprises (substantially consists of) four side boards fitted in a rigid manner but separable from one another.

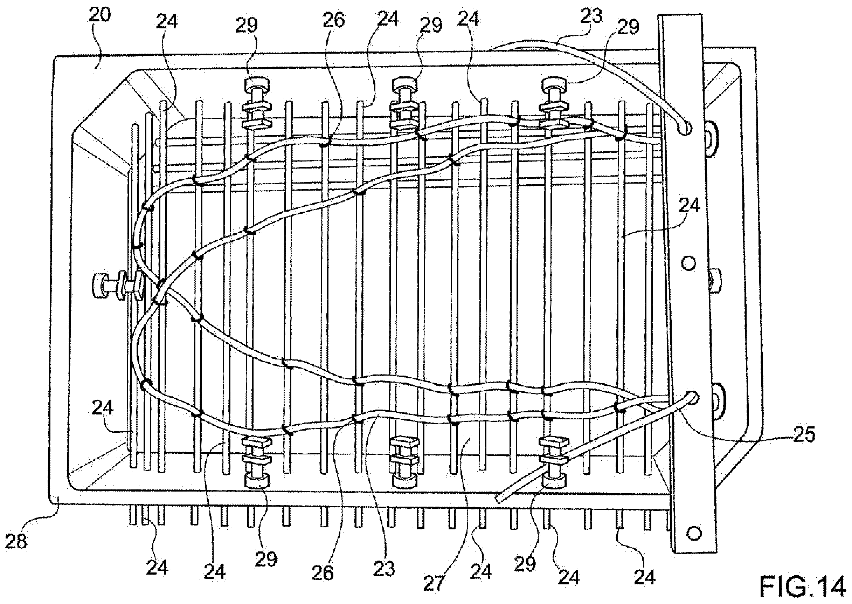

According to some non-limiting embodiments (like the one illustrated in figures 13 and 14), pins 29 are fitted in a releasable manner on the inner surfaces of the walls of the mother mould 28. Said pins remain buried (once polymerization has been obtained) in the resin of the pressing body 12 and are subsequently used to couple in a fixed manner the pressing body 12 with the frame 20 (for example by means of screws which are screwed into the pins 29).

The pressing body 12 is obtained by following a procedure analogous to the one described above relative to the pressing body 7. In this case, according to some embodiments, the structure illustrated in figure 14 is used which differs from that of figure 13 mainly due to the fact that both the tubes 23 and 25 have one end connected to a respective hole 19 and that the plate 27 replaces the plate 22. The plate 27 (which can be the same as or different from the plate 22) has a surface with the shape in negative of the pressing surface 13.

According to alternative embodiments not illustrated, any vertical channels (alternative to channels 17 and 18) are obtained by milling.

In accordance with one aspect of the present invention, a method is provided for manufacturing ceramic products (for example tiles and/or crockery - like cups, oven-proof dishes etc.).

The method comprises a pressing step, during which the blank 4 comprising clay and up to 25% by weight, relative to the total weight of the blank 4, of water is compressed between the half-mould 5 of the mould 3 and at least the half-mould 6 of the mould 3, so as to obtain the ceramic product 2 (e.g. a semifinished product which, once fired, becomes a tile and/or a piece of crockery - like a cup or an oven-proof dish). In particular, during the pressing step, the blank 4 is compressed (between the half-moulds 5 and 6) with a pressure ranging from approximately 25 Kg/cm² to approximately 35 Kg/cm² (more precisely with a pressure of approximately 30 Kg/cm²).

During the (at least part of the) pressing step, a gas (air) is forced through the pressing body 7 towards the half-mould 6 (in particular, so that gas flows out of the pressing surface 8) . More precisely, during at least part of the pressing step, the gas is kept under pressure inside the pressing body 7 (where the half-mould 5 is closed on the blank 4 in a fluid-tight manner).

In particular, during the pressing step, the gas is forced (and passes) through the porosity (more precisely, the pores) of the pressing body 7 towards the half-mould 6. In other words, during the pressing step, the gas is forced (and passes) through the (mass of the) resin of the pressing body 7. More precisely but not necessarily, during the pressing step, the gas is forced (and passes) through the pores (the porosity) of the resin of the pressing body 7.

The pores (and/or the porosity) of the pressing body 7 are as defined above.

Advantageously but not necessarily, during the (at least part of the) pressing step, the gas is forced (fed) (by the pressure device 14) through the pressing body 7 (more precisely, the pores thereof) towards the half-mould 6 at a pressure ranging from approximately 1.5 bar to approximately 6 bar.

Advantageously but not necessarily, a gas (air) is forced through the pressing body 12 towards the half-mould 5 (in particular, so that gas flows out of the pressing surface 13). More precisely, during at least part of the pressing step, the gas is kept under pressure inside the pressing body 12 (where the half-mould 6 is closed on the blank 4 in a fluid-tight manner).

In particular, during the (at least part of the) pressing step, the gas is forced (fed) (by the pressure device 14) through the pressing body 12 (more precisely, through the pores of the pressing body 7) towards the half-mould 5 at a pressure ranging from approximately 1.5 bar to approximately 6 bar.

In particular, the blank 4 comprises from 14% to 25% by weight, relative to the total weight of the blank 4, of water. According to some non-limiting embodiments, the blank 4 comprises (is) water, clay (predominant part), silica and possibly feldspars. In some cases, the blank 4 comprises (is) clay (including a mixture of clays).

More precisely, the half-mould 5 (in particular, the pressing body 7) is as described relative to the apparatus 1. In addition or alternatively, the half-mould 6 (in particular, the pressing body 12) is as described above relative to the apparatus 1.

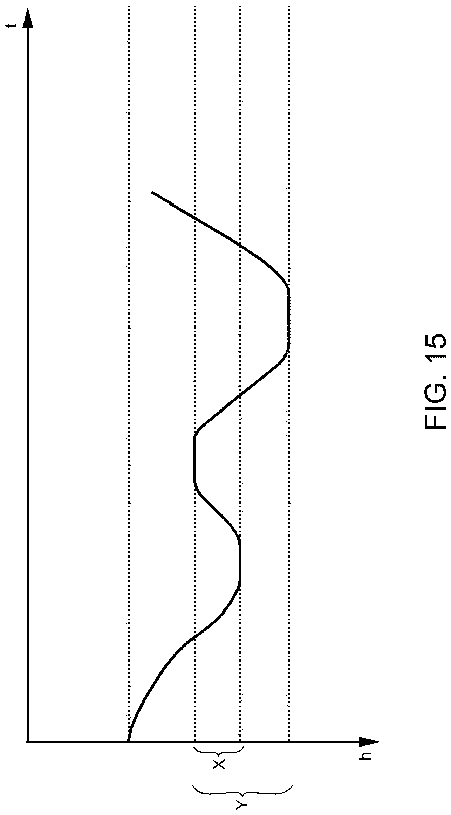

According to some non-limiting embodiments (reference should be made, in particular, to figure 15, in which the X axis shows the time and the Y axis the distance between the half-mould 5 and the half-mould 6), the pressing step comprises a first approaching sub-step, during which the half-mould 5 and the half-mould 6 move close to each other and the gas is forced through the first pressing body 7 (more precisely, through the pores thereof) towards the second half-mould 6; a parting sub-step, which is subsequent to the first approaching sub-step and during which the half-mould 5 and the half-mould 6 part from each other; a second approaching sub-step, which is subsequent to the first approaching sub-step (in some cases but not necessarily, subsequent to the parting sub-step) and during which the half-mould 5 and the half-mould 6 move close to each other and the gas is forced through the first pressing body 7 (more precisely, through the pores thereof) towards the second half-mould (6).

It should be noted that, in the present text, when it is indicated that the half-mould 5 and the half-mould 6 are displaced (e.g. moved closer or farther away) from each other, it is understood to mean either that only one half-mould is moved (while the other remains still) or that both are moved. According to specific and non-limiting embodiments, the half-mould 5 is moved (parted from and/or moved closer to the half-mould 6) (while the half-mould 6 remains substantially still).

It has been experimentally observed that, surprisingly, by adopting the method according to the present invention, the ceramic products 2 obtained have significantly fewer surface defects.

According to some non-limiting embodiments, the method comprises a shaping step, which is prior to the pressing step and during which the blank 4 is pre-shaped so as to present at least one surface (for example the surface of the face 10) with a shape similar to the surface of the pressing surface 8.

In this way the relative sliding between the blank 4 and the pressing body 7 is reduced and, therefore, the life of the half-mould 5 (more precisely, of the pressing body 7) is increased; also the presence of surface defects on the ceramic products 2 is reduced.

Advantageously but not necessarily, the blank 4 has dimensions (in particular, of the face 10) substantially equal to those of the pressing body 7 (in particular, of the pressing surface 8). Also in this way, it is possible to reduce the relative sliding between the blank 4 and the pressing body 7 and, therefore, increase the quality of the ceramic products 2 and the life of the half-mould 5.

In particular, during the first approaching sub-step, the parting sub-step and the second approaching sub-step, said blank 4 is arranged between the first half-mould 5 and the second half-mould 6.

Following these observations, it has been hypothesized that the surface defects previously encountered were due to pockets of gas (of air) that were created between the blank 4 and the pressing surface 8 and which, tending to escape, moved, thereby marking the surface of the ceramic products 2 while said ceramic products were being produced.

It has been hypothesized that with the method of the present invention, the gas is distributed more uniformly on the surface of the blank 4 (and/or the excess gas in some areas flows out of the space between the half-moulds 5 and 6).

It should be noted that, after the first approaching sub-step, the ceramic product 2 is almost completely formed. In practice the second approaching sub-step seems to allow finishing of the face 11. In this way in the subsequent second approaching sub-step, the air gap between the almost completely formed blank and half-mould has a uniform thickness, thus minimizing areas with greater accumulation of air and with them the consequent defects on the finished product.

Advantageously but not necessarily, during the parting sub-step, the first half-mould 5 and the second half-mould 6 move away from each other so that at least part of the gas present between the blank 4 and the pressing surface flows out from a space between the half-mould 5 and the half-mould 6 (in particular, from a space between the half-mould 5 and the blank 4).

Advantageously but not necessarily, during the (at least part of the) first approaching sub-step, the gas exerts a pressure on said blank 4 towards the half-mould 6. In particular, during the (at least part of the) first approaching sub-step, part of the gas remains in a space between the first half-mould (5) and the blank (4).

Alternatively or additionally, during the (at least part of the) second approaching sub-step, the gas exerts a pressure on said blank 4 towards the half-mould 6.

In particular, during the (at least part of the) second approaching sub-step, part of the gas remains in a space between the first half-mould (5) and the blank (4).

According to some non-limiting embodiments (during the first approaching sub-step and/or during the second approaching sub-step; in particular, during the first approaching sub-step), the gas is fed through the first pressing body 7 from 0.5 seconds before to 0.5 seconds after a pressure begins to be exerted on said blank 4 between (by) the half-moulds 5 and 6.

Advantageously but not necessarily (during the first approaching sub-step and/or during the second approaching sub-step; in particular, during the first approaching sub-step), the gas is fed through the first pressing body 7 before (for example up to 0.5 seconds before) a pressure begins to be exerted on said blank 4 between (by) the half-moulds 5 and 6.

Advantageously but not necessarily, during the parting sub-step, the half-moulds 5 and 6 move away from each other by a first distance X (figure 15). For example, the first distance is at least 0.1 mm (in particular, at least 0.5 mm; more in particular, at least 1 mm). According to some non-limiting embodiments, during the parting sub-step, the half-moulds 5 and 6 move away from each other by a first distance up to 5 mm (in particular, up to 3 mm).

Advantageously but not necessarily, during the second approaching sub-step, the first half-mould 5 and the second half-mould 6 move close to each other by a second distance Y greater than the first distance X.

In particular, the second distance Y is greater than the first distance X by at least 0.1 mm.

Advantageously but not necessarily, the second distance is at least 0.2 mm (in particular, at least 1 mm; more in particular, at least 2 mm). According to some embodiments, the second distance is up to 10 mm (for example, up to 8 mm).

It has been experimentally observed that by adjusting the above parameters, the ceramic products 2 are obtained with further improved surface qualities.

According to some non-limiting embodiments, during the (at least part of the) first approaching sub-step and the (at least part of the) second approaching sub-step a pressure is exerted on the blank 4 between (by) the half-moulds 5 and 6.

In particular, during the second approaching sub-step, the ceramic product 2 is obtained. More precisely, during the second approaching sub-step, said blank 4 is compressed so as to obtain said ceramic product 2.

According to some non-limiting embodiments, during the (at least part of the) parting sub-step, the gas is forced through the first pressing body 7 (more precisely, through the pores thereof) towards the second half-mould 6.

Advantageously, during (at least part of the first approaching sub-step and) the second approaching sub-step, the blank 4 is compressed between the half-moulds 5 and 6 with an increasing pressure (figure 2).

In particular, the method also comprises a release sub-step, which is subsequent to the second approaching sub-step and during which the blank 4 is compressed between the half-moulds 5 and 6 with a decreasing pressure (figures 3 and 4).

According to some non-limiting embodiments, the first approaching sub-step comprises a start-of-pressing sub-step, during which the pressure to which the blank 4 is subjected between the half-moulds 5 and 6 begins to increase.

In particular, during the (at least part of the) start-of-pressing sub-step, the gas is forced (by the pressure device 14) through the pressing body 7 (in particular, through the pores thereof) towards the half-mould 6 (in particular, so that gas flows out of the pressing surface 8). More precisely, during the (at least part of the) start-of-pressing sub-step, the gas is kept under pressure inside the pressing body 7 (where the half-mould 5 is closed on the blank 4 in a fluid-tight manner).

According to some non-limiting embodiments, during (all) the (entire) first approaching sub-step, parting sub-step and second approaching sub-step, the gas is forced through the pressing body 7 (in particular, through the pores thereof) towards the half-mould 6.

In particular, the gas is forced through the pressing body 7 towards the half-mould 6 so that a layer of gas is at least partially interposed between the pressing surface 8 and the first face 10 of the blank 4 during the pressing step, more precisely during (at least part of) the first and (at least part of) the second approaching sub-step (in some cases, also during the parting sub-step).

Advantageously but not necessarily, during at least part of the second approaching sub-step, the gas is not forced through the pressing body 7 towards the half-mould 6. This allows the quality of the pressing to be improved. In particular, during at least part of the second approaching sub-step, the gas is not forced by the pressure device 14 through the pressing body 7 towards the half-mould 6.

In other words, during at least part of the second approaching sub-step, the pressure device 14 interrupts forcing the gas through the pressing body 7 towards the half-mould 6.

In these cases, according to some non-limiting embodiments, during at least part of the release sub-step, the gas is not forced through the pressing body 7 towards the half-mould 6. In particular, during at least part of the release sub-step the gas is not forced by the pressure device 14 through the pressing body 7 towards the half-mould 6 (in particular, so that gas flows out of the pressing surface 8).

More in particular, the gas is forced through the pressing body 7 (in particular, through the pores thereof) towards the half-mould 6 so that (at least part) of the gas (in particular, a layer of gas) is at least partially interposed between the pressing surface 8 and the face 10 of the blank 4 during the (at least part of the) second approaching sub-step (and/or of the first approaching sub-step).

It should be noted that when the gas is forced through the pressing body 7 towards the half-mould 6, the gas, as appropriate, moves or does not move (or moves partially) through the pressing body 7 (more precisely, through the pores thereof and the pressing surface 8). In particular, when the pressing body 7 is coupled with the blank 4, the forced gas substantially does not move (but is kept under pressure) through the pressing body 7; when the pressing body 7 is far from the blank 4, the forced gas moves through the pressing body 7.

Advantageously but not necessarily, the method comprises a pre-approaching step, during which the half-moulds 5 and 6 move close to each other until the blank 4 begins to be compressed. During at least part of the pre-approaching step, the gas is fed through the first pressing body 7 towards the half-mould 6 (in particular, so that gas flows out of the pressing surface 8).

The pre-approaching step is prior to the first approaching sub-step. In particular, the pre-approaching step is prior to the start-of-pressing sub-step.

Advantageously but not necessarily, the method comprises a surface treatment step, which is prior to the pressing step and during which a detaching compound is applied on the pressing surface 8 and/or on the face 10 (preferably, on the face 10 of the blank).

In particular, the detaching agent is applied in powder or by spray. According to some embodiments, the detaching agent is organic or inorganic and comprises: solutions of polyvinyl alcohol, silicone solutions, suspensions of talc, suspensions of calcium sulphate and/or polyvinyl alcohol esters.

Advantageously but not necessarily, during at least part of the pressing step, the gas is forced (by the pressure device 14) through the pressing body 12 (in particular, through the pores thereof) towards the half-mould 5 (in particular, so that gas flows out of the pressing surface 8). More precisely, during at least part of the pressing step, the gas is kept under pressure inside the pressing body 12.

According to some non-limiting embodiments, during the (at least part of the) start-of-pressing sub-step, the gas is forced (by the pressure device 14) through the pressing body 12 towards the half-mould 5 (in particular, so that gas flows out of the pressing surface 13). More precisely, during the (at least part of the) start-of-pressing sub-step, the gas is kept under pressure inside the pressing body 12 (where the half-mould 6 is closed with the blank 4 in a fluid-tight manner).

Additionally or alternatively, during the (at least part of the) second approaching sub-step, the gas is forced (by the pressure device 14) through the pressing body 12 towards the half-mould 5. In particular, during (at least part) of the second approaching sub-step, the gas is kept under pressure inside the pressing body 12 (where the half-mould 6 is closed with the blank 4 in a fluid-tight manner).

According to some non-limiting embodiments, during (all) the (entire) start-of-pressing and release sub-steps, the gas is forced through the pressing body 12 towards the half-mould 5.

In particular, the gas is forced through the pressing body 12 towards the half-mould 5 so that a layer of gas is at least partially interposed between the pressing surface 13 and the face 11 of the blank 4 during the pressing step, more precisely during the start-of-pressing sub-steps (in some cases, also during the release sub-step).

Advantageously but not necessarily, during at least part of the second approaching sub-step, the gas is not forced through the pressing body 12 towards the half-mould 5. In particular, during at least part of the second approaching sub-step, the gas is not forced by the pressure device 14 through the pressing body 12 towards the half-mould 5.

In other words, during at least part of the second approaching sub-step the pressure device 14 interrupts forcing of the gas through the pressing body 12 towards the half-mould 5.

In these cases, according to some non-limiting embodiments, during at least part of the release sub-step, the gas is not forced through the pressing body 12 towards the half-mould 5. In particular, during at least part of the release sub-step the gas is not forced by the pressure device 14 through the pressing body 12 (in particular, through the pores thereof) towards the half-mould 5 (in particular, so that gas flows out of the pressing surface 8).

According to some non-limiting embodiments, the method comprises an extraction step for extracting the ceramic product 2 from the mould 3 (in particular, the extraction step is subsequent to the pressing step). In particular, the method also comprises a further pressing step, which is subsequent to the pressing step and to the extraction step and during which a further blank 4, in particular comprising clay and up to 25% (in particular, at least 14%) by weight, relative to the total weight of the further blank 4, of water, is compressed between the half-mould 5 and at least the half-mould 6, so as to obtain a further ceramic product 2.

Advantageously but not necessarily, between the pressing step and the further pressing step (in particular, between the extraction step and the further pressing step) the gas is fed through the pressing body 7 towards the half-mould 6 (in particular, so that gas flows out of the pressing surface 8) . In this way it is possible to obtain a reduction in the water content in the pressing body 7 making the subsequent pressing step more efficient and accurate.

Advantageously but not necessarily, between the pressing step and the further pressing step (in particular, between the extraction step and the further pressing step) the gas is fed through the pressing body 12 towards the half-mould 5 (in particular, so that gas flows out of the pressing surface 13). In this way it is possible to obtain a reduction in the water content in the pressing body 12 making the subsequent pressing step more efficient and accurate.

Alternatively or additionally, between the pressing step and the further pressing step (in particular, between the pressing step and the extraction step) a negative pressure is applied (in particular, a suction) through the pressing body 12 (which, in particular, is arranged below the half-mould 5) (and/or the pressing body 7) (in particular, so that gas enters through the pressing surface 13 - and/or the pressing surface 8). In this way it is possible to obtain a reduction in the water content in the pressing body 12 (and/or in the pressing body 7) making the subsequent pressing step more efficient and accurate.

In particular, the extraction step comprises a separation sub-step, during which the half-moulds 5 and 6 are moved away from each other (one of the two half-moulds 5 and 6 is moved with respect to the other - as specifically illustrated in figures 3 and 4 - or both are moved).

According to some non-limiting embodiments, during at least part of the separation sub-step (more precisely, during an initial part of the parting sub-step; even more precisely, not after the pressing body 7 has a - minimum -distance from the ceramic product 2 of 1 millimetre), a negative pressure is applied (in particular, a suction) on the ceramic product 2 through the pressing body 12 of the half-mould 6 (which, in particular, is arranged below the half-mould 5). In particular, in this way, a force is exerted opposite to the relative loosening movement between the half-mould 5 and the ceramic product 2. This allows a more correct separation to be obtained between the half-mould 5 and the ceramic product 2. Consequently, for example, a better aesthetic quality of the face 10 can be obtained (fewer risks of the face 10 being damaged during the loosening relative to the pressing body 7), and in any case greater control of the correct product collection sequence.

Advantageously but not necessarily, the method comprises a firing step, which is subsequent to the pressing step and during which the ceramic product 2 is treated (fired) at a temperature of at least 950°C (more precisely, at a temperature ranging from 1000°C to 1150°C) (inside an appropriate kiln).

The apparatus 1 and the method in accordance with the present invention have various advantages with respect to the state of the art. For example, with the present invention it is possible to obtain ceramic products 2 with good aesthetic qualities, at the same time significantly reducing the wear on the pressing body 7 and therefore the need to replace it.

Unless explicitly indicated otherwise, the contents of the references (articles, books, patent applications etc.) cited in this text are referred to here in full. In particular the mentioned references are incorporated here for reference.

## Claims

1. A method for manufacturing ceramic products (2);
the method comprises a pressing step, during which a blank (4) comprising clay and up to 25% (in particular, at least 14%) by weight, relative to the total weight of the blank (4), of water is pressed between a first half-mould (5) of a mould (3) and at least a second half-mould (6) of the mould (3), so as to obtain a ceramic product (2);
the method being **characterized in that** the first half-mould (5) comprises a first pressing body (7) having a first pressing surface (8) provided with a first given shape, which, during the pressing step, is pressed onto a first face (10) of said blank (4) so as to obtain at least part of a first face (11) of the ceramic product (2); the second half-mould (6) comprises a second pressing body (12) having a second pressing surface (13), the first pressing body (7) comprises an at least partially porous resin;
during at least part of the pressing step, a gas is forced through the first pressing body (7) towards the second half-mould (6);
the pressing step comprises a first approaching sub-step, during which the first half-mould (5) and the second half-mould (6) move close to one another and the gas is forced through the first pressing body (7) towards the second half-mould (6); a parting sub-step, which is subsequent to the first approaching sub-step and during which the first half-mould (5) and the second half-mould (6) move away from one another; and a second approaching sub-step, which is subsequent to the parting sub-step and during which the first half-mould (5) and the second half-mould (6) move close to one another and the gas is forced through the first pressing body (7) towards the second half-mould (6); during the first approaching sub-step, the parting sub-step and the second approaching sub-step, said blank (4) is arranged between the first half-mould (5) and the second half-mould (6).

2. The method according to claim 1, wherein, during the parting sub-step, the first half-mould (5) and the second half-mould (6) move away from one another so that at least part of the gas present between said blank (4) and the first pressing surface flows out from a space comprised between the first half-mould (5) and the second half-mould (6) (in particular, from a space between the first half-mould (5) and said blank (4)).

3. The method according to claim 1 or 2, wherein, during at least part of the first approaching sub-step, the gas exerts a pressure upon said blank (4) towards the second half-mould (6); for example, during at least part of the first approaching sub-step, part of the gas remains in a space comprised between the first half-mould (5) and the blank (4).

4. The method according to any one of the preceding claims, wherein the gas is fed through the first pressing body from 0.5 seconds before to 0.5 seconds after a pressure starts being exerted upon said blank (4) between the first and the second half-mould (5, 6).

5. The method according to any one of the preceding claims, wherein the gas is fed through the first pressing body (7) before (for example, up to 0.5 seconds before) a pressure starts being exerted upon said blank (4) between the first and the second half-mould (5, 6).

6. The method according to any one of the preceding claims, wherein, during the parting sub-step, the first half-mould (5) and the second half-mould (6) move away from one another by a first distance of at least 0.1 mm (for example, ranging from 0.1 mm to 5 mm) .

7. The method according to claim 6, wherein, during the second approaching sub-step, the first half-mould (5) and the second half-mould (6) move close to one another by a second distance, which is greater than the first distance (for example, greater by at least 0.1 mm).

8. The method according to any one of the preceding claims, wherein, during the second approaching sub-step, the first half-mould (5) and the second half-mould (6) move close to one another by a second distance of at least 0.2 mm (for example, ranging from 0.2 mm to 10 mm).

9. The method according to any one of the preceding claims, wherein, during at least part of the first approaching sub-step and at least part of the second approaching sub-step, a pressure is exerted upon said blank (4) between the first half-mould (5) and the second half-mould (6); for example, during the second approaching sub-step, said blank (4) is compressed so as to obtain said ceramic product (2).

10. The method according to any one of the preceding claims, wherein during at least part of the parting sub-step, the gas is forced through the first pressing body (7) towards the second half-mould (6).

11. The method according to any one of the preceding claims, wherein the first pressing body (7) comprises (in particular, is made of) said at least partially porous resin and has, on the inside, at least one channel (17), which is arranged at a distance of at least 0.5 cm and up to 5 cm from the first pressing surface (8) and, in particular, has a cross-section of at least 4 mm²;
the mould (3) comprises a pressure device (14), which is connected to the channel (17) and feeds the gas under pressure into the channel (17) so as to force the gas through the first pressing body (7) towards the second half-mould (6).

12. The method according to any one of the preceding claims, wherein, during at least part of the second approaching sub-step, said blank (4) is compressed between the first and the second half-mould (5, 6) with an increasing pressure; the method also comprises a release sub-step, which is subsequent to the second approaching sub-step and during which said blank (4) is held between the first and the second half-mould (5, 6) with a decreasing pressure.

13. The method according to any one of the preceding claims, wherein the first approaching sub-step comprises a start-of-pressing sub-step, during which the pressure to which said blank (4) is subjected between the first and the second half-mould (5, 6) starts increasing; during the start-of-pressing sub-step, the gas is forced through the first pressing body (7) towards the second half-mould (6).

14. The method according to any one of the preceding claims, wherein the gas is forced through the first pressing body (7) towards the second half-mould (6) so that gas is at least partially interposed between the first pressing surface (8) and the first face (10) of said blank (4) during at least part of the second approaching sub-step; for example, the gas is forced through the first pressing body (7) towards the second half-mould (6) so that gas is at least partially interposed between the first pressing surface (8) and the first face (10) of the blank (4) during the pressing step, more precisely during the first approaching sub-step, the parting sub-step and the second approaching sub-step.

15. The method according to any one of the preceding claims and comprising a pre-approaching step, during which the first and the second half-mould (5, 6) move close to one another until the pressure to which said blank (4) is subjected starts increasing; during at least part of the pre-approaching step, the gas being fed through the first pressing body (7) towards the second half-mould (6); the pre-approaching step is prior to the first approaching sub-step; in particular, the pre-approaching sub-step is prior to the start-of-pressing sub-step.

16. The method according to any one of the preceding claims and comprising an extraction step to extract the ceramic product (2) from the mould (3) and a further pressing step, which is subsequent to the pressing step and to the extraction step and during which a further blank (4), comprising clay and up to 25% (in particular, at least 14%) by weight, relative to the total weight of the further blank (4), of water, is compressed between the first half-mould (5) and at least the second half-mould (6), so as to obtain a further ceramic product (2); between the pressing step and the further pressing step, the gas being fed at least through the first pressing body (7) towards the second half-mould (6).

17. The method according to any one of the preceding claims, wherein the first pressing body (7) has, on the inside, at least one channel (17; 18), in particular having a cross-section of at least 4 mm², more in particular at least 7 mm², connected to a pressure device (14), which introduces the gas under pressure into the channel (17; 18) so as to force the gas through the first pressing body (7) towards the second half-mould (6).

18. The method according to any one of the preceding claims, wherein the first pressing body (7) is made of the at least partially porous resin and has a total open porosity ranging from 10% to 50% by volume, relative to the total volume of the first pressing body (7); for example, the first pressing body (7) has a flexural strength of at least 7 MPa; for example, the first pressing body (7) has a tensile strength of at least 5 MPa; for example, the first pressing body (7) has pores with a mean diameter ranging from 0.5 to 80 µm; for example, the first pressing body (7) comprises an at least partially porous resin chosen in the group consisting of: acrylic resins, polyester resins, polyurethane resins, epoxy resins, and a combination thereof.

19. The method according to any one of the preceding claims and comprising a surface treatment step, which is prior to the pressing step and during which a detaching compound is applied on the first pressing surface (8) and/or on the first face (10) of said blank (4).

20. The method according to any one of the preceding claims and comprising a firing step, which is subsequent to the pressing step and during which said ceramic product (2) is fired at a temperature of at least 950°C.

21. The method according to any one of the preceding claims, wherein said first pressing body (7), in particular its at least partially porous resin, comprises up to 18% by weight, relative to the total weight of the pressing body (7), of water.

22. The method according to any one of the preceding claims, wherein the first half-mould (5) comprises a frame (20), where the first pressing body (7) is fitted and which comprises a protuberance (21) projecting towards the second half-mould (6) beyond the first pressing surface (8); the method comprising a pre-approaching step, during which the first and the second half-mould (5, 6) move close to one another and said protuberance (21) penetrates said blank (4); for example, said protuberance (21) extends around the pressing surface (8).

23. The method according to any one of the preceding claims, wherein the second pressing body (12) comprises an at least partially porous second resin;
during at least part of the pressing step, a gas is forced through the second pressing body (12) towards the first half-mould (5); for example, the second pressing body (12) (in particular, the at least partially porous second resin) has a total open porosity ranging from 10% to 50% by volume, relative to the total volume of the second pressing body (12), and a flexural strength of at least 7 MPa; in particular, the second pressing body (12) has a tensile strength of at least 5 MPa and pores with a mean diameter ranging from 0.5 to 80 µm; in particular, the at least partially porous second resin is chosen in the group consisting of: acrylic resins, polyester resins, polyurethane resins, and a combination thereof.

24. The method according to any one of the preceding claims and comprising an extraction step to extract the ceramic product (2) from the mould (3) and a further pressing step, which is subsequent to the pressing step and to the extraction step and during which a further blank (4), comprising clay and up to 25% (in particular, at least 14%) by weight, relative to the total weight of the further blank (4), of water, is compressed between the first half-mould (5) and at least the second half-mould (6), so as to obtain a further ceramic product (2); between the extraction step and the further pressing step, a negative force (in particular, a suction) is applied through at least the first pressing body (7), in particular, also through the second pressing body (12).
